# EUROPEAN PATENT SPECIFICATION

(11) **EP 2 847 962 B1**
(45) Date of publication and mention of the grant of the patent: **20.11.2019**
(21) Application number: 12876393.5
(22) Date of filing: 10.05.2012
(51) Int. Cl.: H04L 29/06, H04L 29/08, H04L 12/28

(54) **SYSTEM, METHOD AND COMPUTER PROGRAM PRODUCT FOR PROTOCOL ADAPTATION**
SYSTEM, VERFAHREN UND COMPUTERPROGRAMMPRODUKT ZUR PROTOKOLLANPASSUNG
SYSTÈME, PROCÉDÉ ET PRODUIT PROGRAMME D'ORDINATEUR POUR L'ADAPTATION D'UN PROTOCOLE DE COMMUNICATION

(43) Date of publication of application: 18.03.2015
(73) Proprietor: Telefonaktiebolaget LM Ericsson (publ), 164 83 Stockholm (SE)
(72) Inventor: YASUKAWA, Kenta, Kawasaki Kanagawa 213-0015 (JP); GOLD, Richard, 60486 Frankfurt am Main (DE)
(74) Representative: Brann AB
(86) International application number: PCT/SE2012/050497
(87) International publication number: WO 2013/169156

(56) References cited:
- EP-A2- 1 131 919
- WO-A2-02/50719
- US-A1- 2001 052 061
- US-A1- 2005 286 557
- US-A1- 2008 144 651

## Description

### Technical field

The present disclosure relates generally to a method, system and a computer program for communication protocol adaptation and handling of devices connected to the system. Especially it relates to a method performed by a protocol adaptor system for enabling a device to communicate with a generic application in a communications network where the generic application uses a generic protocol and such a protocol adaptor system configured accordingly. It also especially relates to a computer program comprising computer readable code means for this enabling.

### Background

The number of devices connected to various communications networks is increasing. In general, in homes or household environments, there are devices for media recording and media consumption, devices for controlling the home itself, like lights, temperature or surveillance, and a wide range of other types of devices. There are different user groups of specific devices such as: elderly people with needs for assistance alarms or hearing aids, remote located homes which are desired to be enabled for remote control of heating or door locks, to give a few examples. Another area of device usage is commercial buildings, where indoor as well as outdoor surveillance of environments may be desired, as well as automation and control of sensors and actuators.

There are a number of different reasons for connection of electronic devices to networks, e.g. from a desire to connect electronic devices to communications networks for direct benefits like remote control of a media appliance, to, for example, energy saving by better control of energy usage or to use energy when it cheap. These growing trends of connection of devices to networks, are inviting an increasing number of suppliers of electronic devices. This leads to a variety for consumers and solution builders to choose from, but on the other hand it increases the technical complexity of systems. Each device supplier of each device may have its own version and unique benefit, which may attract the users of the devices. However, as of today it may require expert knowledge in networking to connect a new device for e.g. a home cinema or elderly emergency assistance. It may have serious consequences if a device is faulty connected.

The variety of suppliers of different types of devices represents dimensions of complexity, seen from a technical aspect. Another dimension of complexity is the various protocols available for connection of devices. Some protocols are well established and have been used for some time, and some are new and maturing. Some of the protocols are rich and supports a broad range of applications like UPnP (Universal Plug and Play), where some protocols may just support basic on/off commands, like certain implementations of ZigBee (the wireless mesh network standard). Another issue is the underlying communication network and the protocols for that. Examples of today may be TCP/IP on Ethernet, TCP/IP on Wireless LAN, plain SMS (simple message service), as well as ZigBee or propriety protocols. Users of devices may not want to be locked into a specific supplier of devices, and neither be locked to specific technologies for connection of devices to communication networks.

From a user perspective, the providers of devices may not be the most suitable provider of applications, the applications which are desired or necessary to operate or control the connected devices. Applications for operation of devices may well originate from a third party than a device manufacturer. An example is the home cinema, where the media player, is from one manufacturer, the display from another vendor, and the sound system from yet another vendor. Another example is a population of buildings, where the buildings may be built by different entrepreneurs, at different points in time, un-coordinated, all more or less automatized, and later in time connected to a common system for home automation. In the latter example, the common system would comprise a fragmented plethora of devices.

There are a number of problems associated with connection of devices to networks. For example, how should a new device and a network recognize each other? How can an application developer detect and know which type of device that has been connected to a network, and adapt the application for that particular device? Application developers today need to create a specific communication protocol implementation for each specific device type and potentially version. Application development becomes complex, because it may be difficult for an application developer to keep track of all device manufacturers and their respective versions. Another aspect is that upgrades may need to be synchronized. And yet, may end users or consumers will be inclined to avoid the hassle of network configuration when connecting new devices?

The following publications are mentioned as prior art.

US patent application publication 2005/286557 A1 discusses about a network relay apparatus which supports various network protocols. The network relay apparatus includes a first modem unit communicating with a first network using a first protocol, a second modem unit communicating with a second network using a second protocol, a bridge unit converting data to be suitable for the first and second protocols when the data is exchanged between the first modem unit and the second modem unit, and a controller generating the first and second modem units and the bridge unit in a software manner.

EP patent publication 1 131 919 A2 discusses about enabling automatic creation of partly functionally equivalent software representations for a second network so as to make devices and services of a first network accessible from the second network.

US patent application publication 2001/052061 A1 discusses about a data storage managing apparatus in which I/O requests sent by different hosts using different protocols are treated in the same manner for accessing the data storage. Protocol conversion is done for converting protocols to a local network protocol in order to route the data to an external system.

### Summary

It is an object of embodiments described herein to address at least some of the problems and issues outlined above. It is an object to address how to enable communication between generic applications and devices. Another object is to enable communication between a newly connected unknown device and a generic application. It is possible to achieve these objects and others by using a system, method and computer program as defined in the attached independent claims.

A method in a protocol adaptor system is provided for enabling a device to communicate with a generic application in a communications network where the generic application uses a generic protocol. The method comprises detecting that the device is unsupported by a specific protocol and that the device uses a variant of the specific protocol in the system. The method further comprises determining a new fragment required for communication adaptation of said specific protocol, wherein the fragment is a component being capable of protocol adaptation. The method further comprises retrieving the new fragment needed for adaptation of the specific protocol to said variant. The method further comprises installing the fragment in the specific protocol, thereby enabling said communication between the generic application and the newly connected device.

An advantage with the method is that developers of generic applications are not required to adapt a generic application for a variety of devices, where each device may require its specific communication.

A protocol adaptor system is provided configured to enable a device to communicate with a generic application in a communications network where the generic application uses a generic protocol unit, wherein the generic protocol unit is arranged to detect that the new device is unsupported by a specific protocol unit and that that the device uses a variant of the specific protocol unit in the system. The system further comprises the generic protocol unit, arranged to determine a new fragment required for communication adaptation, wherein the fragment is a component being capable of protocol adaptation. The system further comprises the generic protocol unit arranged to retrieve the new fragment needed for adaptation of the specific protocol unit to said variant, from a protocol provider unit. The system further comprises the generic protocol unit, arranged to install the new fragment in the specific protocol unit, thereby enabling the communication between the generic application and the newly connected device.

An advantage with the protocol adaptor system is that when a new device is installed, the system may detect the new device and automatically retrieve and install a necessary fragment for enabling of communication with the newly installed device. Thereby users may avoid the hassle of and sometimes troublesome installation and configuration of technical equipment.

A computer program is provided, comprising computer readable code means for enabling a device to communicate with a generic application in a communications network where the generic application uses a generic protocol, which when run by a protocol adaptor system causes the protocol adaptor system to perform detection that the device is unsupported by a specific protocol and that the device uses a variant of the specific protocol in the system. The computer program further comprises determining a new fragment required for communication adaptation of said specific protocol, wherein the fragment is a component being capable of protocol adaptation. The computer program further comprises retrieving the new fragment needed for adaptation of the specific protocol to said variant. Further comprising installing the fragment in the specific protocol, thereby enabling said communication between the generic application and the newly connected device.

A computer program product is provided. The computer program product comprising a computer readable medium and a computer program, wherein the computer program is stored on the computer readable medium.

The above method, system and computer program may be configured and implemented according to different optional embodiments. In one possible embodiment the specific protocol unit is arranged to transmit a search request to, and receive a response from, the device. In another embodiment the generic protocol unit comprises a local schema unit which is arranged to determine, based on device information, the new fragment required to enable communication between the generic application and the device. In another embodiment the generic protocol unit is arranged to retrieve the determined fragment from the local schema unit to the specific protocol unit. In another embodiment the local schema unit at a failure of determination of a required new fragment is arranged to transmit a request to the protocol provider unit, wherein the request comprises device information. In another embodiment the protocol provider unit comprises a service schema unit which is arranged to receive a request comprising device information, and to determine which specific fragment that is required to enable communication between the generic application and the device, based on the device information.

In another embodiment the service schema unit is arranged to retrieve the determined fragment from a fragment database. In another embodiment the protocol provider unit is arranged to deliver the requested new fragment to the local schema unit. In another embodiment a fragment generator unit is arranged to generate a fragment which associates the generated fragment with the device and stores the generated fragment in the fragment database. In another embodiment the local schema unit is arranged to pre-retrieve a fragment which is likely to be required for future new devices, wherein the protocol provider unit determines the fragments to pre-retrieve.

The dependent claims define embodiments of the invention. Further possible features and benefits of this solution will become apparent from the detailed description below.

### Brief description of drawings

The solution will now be described in more detail by means of exemplary embodiments and with reference to the accompanying drawings, in which:
Fig. 1 is a block diagram illustrating a protocol adaptor system, according to an exemplifying embodiment.
Fig. 2a is a block diagram illustrating a protocol adaptor system, according to some possible embodiments.
Fig. 2b is a block diagram illustrating an example of the generic protocol unit.
Fig. 3 is a flow chart illustrating a procedure in a protocol adaptor system according to an exemplifying embodiment.
Fig 4 is a flow chart illustrating a procedure in a protocol adaptor system, according to further possible embodiments.
Fig. 5 is block diagram illustrating a clustered protocol adaptor system.

### Detailed description

Briefly described, a system is provided for protocol adaptation. When a new device is connected to a network, it may require a specific protocol for communication. Typically a device may be intended for communication with, or controlled by an application. However, a specific application for each specific device is not desired. Hence should a generic application with certain benefits be able to communicate with devices comprising features supporting the benefits. A generic application may be a media player, a home automation application for controlling light heating/cooling etc, a surveillance application controlling motion detectors and cameras for alarm triggering etc, not limiting to other types of generic applications that may communicate with various devices. The herein described system adapts communication between a device with specific protocol requirements, and an application communicating via a generic protocol. A generic protocol enables a generic application to send an instruction in one standard format, for example "light=on", or receive a sensor reading in one standard format, for example temperature=18 degrees Celsius, regardless of which specific protocol and message format a devices uses. The system further may look for, and install necessary components in specific protocols, to enable communication with new connected devices. Such new components may be preinstalled in a gateway unit, or provided by a protocol provider unit.

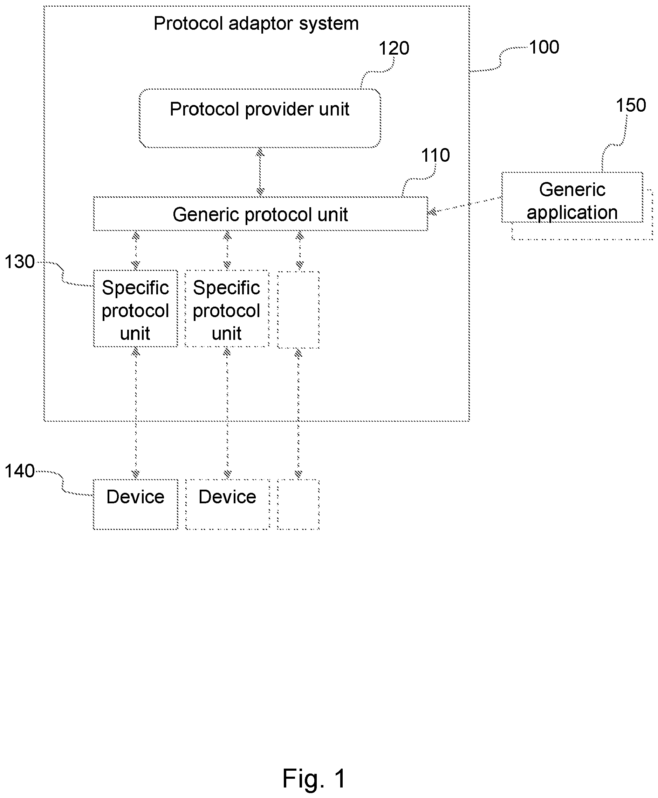

An example of how a protocol adaptor system 100 may be arranged will now be described with reference to Fig. 1. The Fig. 1 shows a protocol adaptor system 100 configured to handle devices 140 connected to the protocol adaptor system 100. A generic protocol unit 110 arranged to interface with an application 150, respective a specific protocol unit 130 is shown, and the specific protocol unit 130 handles communication with a device 140.

When a new device 140 is connected to the protocol adaptor system 100, a specific protocol unit 130 recognizes that a new device 140 has been connected. If the specific protocol unit 130 has support for communication with the device 140, communication may be instantly enabled between the device 140 and the generic protocol unit 110, because the specific protocol unit 130 already has necessary support for communication with the new device. Thereby, the device 140 is able to communicate with the generic application 150. The generic application 150 performs generic communication via the generic protocol unit 110, and the communication is adapted by the specific protocol unit 130 for the device 140, to meet the device 140 protocol requirements. The generic protocol unit 110 may have a generic device API, GDA, (API - Application Programming Interface). The GDA provides the generic application 150 one way of communication, e.g. only one set of commands to transmit and one set of readings to receive. An advantage with the GDA is that generic applications 150 may be programmed in a generic way for different types of devices 140, or communicates generically with different devices 140. Otherwise applications must have support for each specific protocol and how each type of device complies with that protocol. The devices 140 may however have identical or similar features or functions. Examples of devices 140 are: various media players; power switches; temperature and other climate type of meters and actuators; surveillance equipment like cameras, radars and motion detectors; sports and training equipment; healthcare monitoring devices; elderly people emergency devices, not limiting the description to other related devices or other types of devices. By mapping commands and events in the specific protocol unit to service schemas used in communication between the generic protocol unit and the generic application 150, the generic application 150 does not have to care about how a specific device expect communication to be performed.

When the specific protocol unit 130 detects a new unknown connected device 140, the specific protocol unit 130 may report to the generic protocol unit 110 that the new unknown device 140 is unsupported by the specific protocol unit 130, and that a new fragment is needed to enable communication with the newly connected device 140. Examples of a fragment is a piece of computer program code in script or binary format, an extension to an already excising protocol, a service schema for mapping of service extensions, a table mapping different service features, or a text string, not limiting a fragment to be in other formats. One example embodiment of a fragment is OSGi bundle fragment used to dynamically extend an OSGi bundle. Once a fragment is attached to a host module, it works as if it has been a part of the module. Therefore, by dynamically loading a fragment for a specific protocol unit 130, it is possible to add logic to map a service schema to a newly discovered device. A service schema may be a table for translation of commands, readings, settings, etc. A service schema may also be a simple text string, or a document describing structure of a service and its properties and actions. An example of such a document may be a document in XML-format (extensible markup Language). A service schema may also be computer program code in script format or binary, for conversion or translation of commands, readings, settings, etc. A service defined in a service schema may be implemented by different specific protocol units 130 with mapping protocol specific commands and parameters to the ones corresponding in the schema. By doing the mapping, applications are able to communicate with devices which use different protocols in a same manner as far as they implement a same service. If it is determined by the generic protocol unit 110 that a new fragment is required, a fragment is retrieved from a protocol provider unit 120. The new fragment is further installed by the generic protocol unit 110 in the specific protocol unit 130 to enable communication between the new device 140 and the generic application 150.

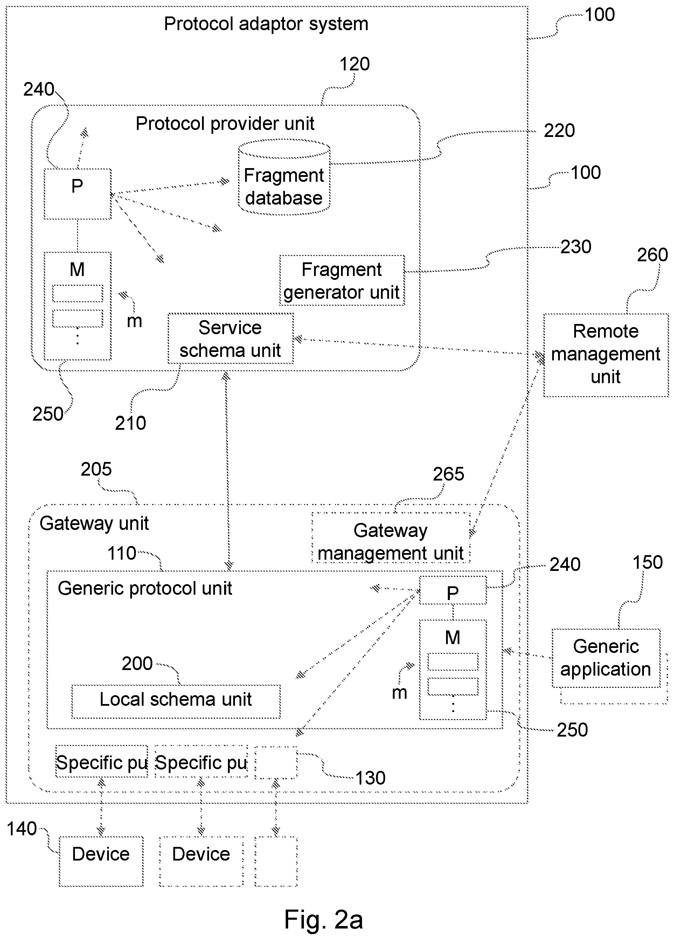

Now looking at Fig. 2a, which shows embodiments of the protocol adaptor system 100, with the generic protocol unit 110 comprising a local schema unit 200, and the protocol provider unit 120 comprising a service schema unit 210, a fragment database 220 and a fragment generator unit 230.

According to an embodiment, the specific protocol unit 130 may transmit a search request. If there is a new device 140 connected, the new device 140 may respond to the specific protocol unit 130, and the specific protocol unit 130 receives the response from the new device 140. A search request may be transmitted as a DHCP broadcast, or a request to a multicast group which devices 140 would be expected to be listening to. This is not limiting other types of requests to be used. New and/or known devices 140 may be responding to the request according to used protocol. According to an embodiment, the generic protocol unit 110 may be arranged to determine, if the newly connected device 140 is supported by the specific protocol unit 130. The generic protocol unit 110 may also determine that a new fragment is required for the specific protocol unit 130. If it is determined that a new fragment is required, the determination of which fragment that is required may be performed by the local schema unit 200. The determination may be based upon information about the protocol, device vendor, device id, etc. When the local schema unit 200 has determined which fragment that is required to enable communication between the generic application 150 and the newly connected device 140, the generic protocol unit 110 may retrieve the fragment from the local schema unit 200, and install the fragment in the specific protocol unit 130. According to an embodiment, a specific protocol unit 130 may for example support any of TCP/UDP IP (Transfer Control Protocol/User Datagram Protocol/Internet Protocol), UPnP (Universal Plug and Play), Bonjour, Z-wave, ZigBee, CoAP (Constrained Application Protocol), TR069 (Technical Report 069), plain text (e.g. txt files), XML (extensible markup Language), or JSON (JavaScript Object Notation), e-mail, http (Hypertext Transfer protocol), https (http secure), ftp (file transfer protocol), SIP (Session Initiation Protocol), Bluetooth, or proprietary protocols such as ANT+, not limiting other protocols to be used.

The generic protocol unit 110 and the specific protocol units 130 may be implemented in a gateway unit 205. Examples of a gateway unit 205 is: ADSL router, wireless LAN access device, fiber-to-the-home termination device, access points for wireless devices, mobile terminal, vehicle arranged terminal, home automation access units, TV set top boxes, pluggable PC's (miniaturized network connected PC), and similar network access points, not limiting to other units. As an example, the gateway unit 205 may be operated by computer program code according to the OSGi (Open Services Gateway initiative), as well as other unix-based systems, or other proprietary systems suitable for a gateway unit 205.

If the local schema unit 200 fails to determine which fragment that is needed for a new device, the local schema unit 200 may transmit a request to the protocol provider unit 120. Such a request may comprise information about the newly connected device. Examples of information about a device may include: device id, device type, services supported by the device, hardware capabilities, MAC-address (Media Access Control address), vendor id, serial number, production date, protocol name, protocol version, supported features list, location.

According to an embodiment, the protocol provider unit 120 comprises the service schema unit 210 and the service schema unit 210 receives the request from the local schema unit 200, including device information. The service schema unit 210 may determine which specific fragment that is needed for enabling communication between the new device 140 and the generic application 150. The determination may be based on the device information in the request. An example of such information included in a request is: Protocol: CoAP, Device ID: MAC address, Service IDs: </weatherResource>;rt="ZurichWeather";title="GET the current weather in zurich", this should be seen as an illustrative example, and not limiting other formats or contents in requests. According to an embodiment, the service schema unit 210 retrieves the determined fragment from the fragment database 220. A fragment may be stored in the fragment database 220 by suppliers of devices 140, in conjunction with the release of a new device 140. A fragment may also be stored in the fragment database 220 at a later point in time by the device 140 supplier. A fragment may also be stored in the fragment database 220 by another party than the device 140 supplier. Such a party may be a fragment developer, or similar. The weather example is good, but not obvious to be applied on a remote switch, or a volume control on speakers]

An example of a service schema is:

```
 -<service name="TemperatureSensor"> <description>This service type enables reading
 of the current temperature of a temperature sensor </description>
 <category>homeautomation.hvac</category> -<properties> -<parameter
 name="currentTemperature" type="Float"> <description>The current temperature. Unit:
 degrees Celsius</description> </parameter> </properties> </service>
```

Another example is:

```
 -<service name="HeartRateMonitor"> <description>This service type enables reading
 the heart rate.</description> <category>health</category> -<properties> -<parameter
 name="HeartBeatCount" type="Integer"> <description>The measured number of beats.
 Unit: number of beats.</description> </parameter> -<parameter
 name="HeartBeatEventTime" type="Integer"> <description>Represents the time of the
 last valid heart beat event. Unit: milliseconds. </description> </parameter> -<parameter
 name="HeartRate" type="Integer"> <description>The measured heart rate. Unit: beats
 per minute.</description> </parameter> </properties> </service>
```

Another example is:

```
 -<service name="Wakeup"> <description>This service makes it possible to get/set
 wakeup interval and receive wakeup notifications. </description>
 <category>zwave</category> -<properties> -<parameter
 name="awakeNotificationCounter" type="Integer"> <description>A counter that is
 incremented each time a wake-up notification has been received. Subscribe for changes
 in this property to be notified about wake-ups. </description> </parameter> -<parameter
 name="currentWakeuplnterval" type="Integer"> <description>Specifies how often the
 device wakes up. Unit: seconds</description> <min>0</min> <max>16777215</max>
 </parameter> -<parameter name="currentNodeld" type="Integer">
 <description>Specifies the ID of the node receiving the wakeup command. 0 means
 broadcast. </description> <min>0</min> <max>255</max> </parameter> </properties>
 -<actions> -<action name="setWakeuplnterval"> <description>Set the wakeup
 interval.</description> -<arguments> -<parameter name="wakeuplnterval"
 type="Integer"> <description>Specifies how often the device wakes up. Unit:
 seconds</description> <min>0</min> <max>16777215</max> </parameter> -
 <parameter name="nodeld" type="Integer"> <description>Specifies the ID of the node
 receiving the wakeup command. 255 means broadcast. </description> <min>0</min>
 <max>255</max> </parameter> </arguments> </action> </actions> </service>
```

The service schema unit 210 may be arranged to deliver the fragment, which is requested by the local schema unit 200. This is in response to the local schema unit's 200 request for a new fragment, including device 140 information, such that a newly connected unknown device may be supported and enable communication between the device 140 and the generic application 150.

Fig. 2a further shows the fragment generator unit 230. The fragment generator unit 230 may automatically generate fragments. Such generation may be triggered by a new specification available for a new device 140 provided by a device 140 supplier. The specification would be the basis for generation of the fragment. An alternative is a new service schema for a device 140, provided for example by a device 140 supplier. A specification may be used for creation of a service schema.

According to an exemplifying embodiment, the local schema unit 200 is arranged to pre-retrieve a fragment. Examples are when a fragment is generated by the fragment generator unit 230 and stored in the fragment database 220, it is also triggered to be pre-retrieved by the local schema unit 200. Another example of triggering of pre-retrieval of a fragment is that usage of a specific fragment has reached a certain threshold, determined e.g. by the service schema unit 210. When the threshold is reached, the local schema unit 200 is triggered by the service schema unit 210, to pre-retrieve a fragment, a fragment which is likely to be needed in a future. An advantage with a pre-retrieval arrangement is that deployment of a fragment in a specific protocol unit 130, may be performed faster than it would be with retrieval from the fragment database 220 via the service schema unit 210.

The physical or logical interfaces of a gateway unit 205 may be basis for determination of fragments that should be pre-retrieved. For example, if the gateway unit 205 has a certain radio interface for connection of certain devices, that may be basis for determination of pre-retrieval of fragments for support of new devices connected to the particular interface, operating a specific protocol. Another basis for determination of which fragments that should be pre-retrieved is by a combination of generic applications 150 and specific protocol units 130. The combination of applications potential feature utilization, and specific protocol units 130 capabilities to utilize service schemas, may form a common denominated feature set, or service schemas, which may be the basis for determination of which fragments that should be pre-retrieved.

Generation of fragments may be carried out according to the following. The previously mentioned GDA, Generic Device API, may be arranged for specific use cases, e.g. controlling an on/off switch, controlling a media player, surveillance of a domain, etc. The GDA may have generic actions, commands, parameters, etc on a side facing the generic application 150. Specific services provided by a specific device 140, may be described according to a standardized schema. Examples of such schemas are: WSDL (Web Services Description Language), WADL (Web Application Description Language), or other types of XML-based schemas, not limiting other standard or propriety schemas to be used. By usage of a device specific standardized schema, it is possible for the fragment generator unit 230 to generate a fragment that may connect feature sets, or service schemas of a specific device with a generic application 150, via a specific protocol unit 140 and the generic protocol unit 110.

In Fig. 2a, a remote management unit 260 and a gateway management unit 265 are shown. The remote management unit 260 may receive instructions from the service schema unit 210, about which fragment that should be transmitted to the generic protocol unit 110. The remote management unit 260 may transmit such instructions to the gateway management unit 265. The gateway management unit 265 may, locally in the gateway unit 205, install the fragment in the specific protocol unit 130. An instruction from the remote management unit 260, may include directions for the gateway management unit 265 to retrieve the fragment from the fragment database 220, and install the fragment. Optionally the gateway management unit 265, may receive the instructions, and further instruct the local schema unit 200, to retrieve the fragment from the fragment database 220, and install the fragment in the specific protocol unit 130.

According to an exemplifying embodiment the remote management unit 260 is operated according to TR069 ACS (Technical Report 069 Auto Configuration Servers) and the communication between the remote management unit 260 and the gateway management unit 265 is operated according to TR069.

According to an exemplifying embodiment, the service schema unit 210 instructs the remote management unit 260 with a list of fragments. The listed fragments is not yet requested for enablement of communication between a new device and a generic application 150, but has been determined by the local schema unit 200 or the service schema unit 210, as subjects for pre-retrieval. The remote management unit 260 instructs the gateway management unit 265, to download and store the fragments locally in the local schema unit. Thereby fragments may be locally available when needed for enablement of communication between a new device and a generic application 150.

It should be noted that Fig. 2a illustrates various functional units in the protocol adaptor system 100 and relations to other systems, applications or devices that may interact with the protocol adaptor system 100 and the skilled person is able to implement these functional units in practice using suitable software and hardware means. Thus, this aspect of the solution is generally not limited to the shown structures of the protocol adaptor system 100, and the functional units 110, 120, 130, 200, 210, 220, and 230 may be configured to operate according to any of the features described in this disclosure, where appropriate.

The functional units 110, 120, 130, 200, 210, 220, and 230 described above may be implemented in the protocol adaptor system 100, by means of program modules of a respective computer program comprising code means which, when run by processors "P" 250 causes the protocol adaptor system 100 to perform the above-described actions. The processors P 240 may comprise a single Central Processing Unit (CPU), or could comprise two or more processing units. For example, the processors P 240 may include general purpose microprocessors, instruction set processors and/or related chips sets and/or special purpose microprocessors such as Application Specific Integrated Circuits (ASICs). The processors P 240 may also comprise a storage for caching purposes.

Each computer program may be carried by computer program products "M" 250 in the sensor data system 100, shown in Fig. 2a, in the form of memories having a computer readable medium and being connected to the processors P. Each computer program product M 250 or memory thus comprises a computer readable medium on which the computer program is stored e.g. in the form of computer program modules "m". For example, the memories M 250 may be a flash memory, a Random-Access Memory (RAM), a Read-Only Memory (ROM) or an Electrically Erasable Programmable ROM (EEPROM), and the program modules m could in alternative embodiments be distributed on different computer program products in the form of memories within the protocol adaptor system 100.

According to an embodiment the protocol provider unit 120 is located in a central node. Such a central node may be a node in an operator core network, or a node located at a service providers facility, co-located with other types of service nodes. The protocol provider unit 120 may also be implemented as a cloud service where.

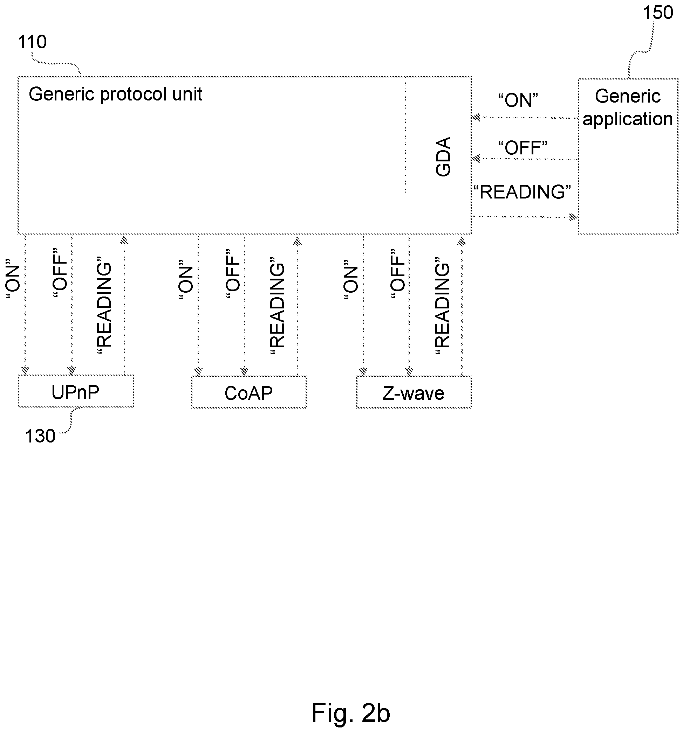

Fig. 2b shows an illustrative example of an embodiment of communication related to the generic protocol unit 110. The figure shows the generic application 150 that communicates generically via the GDA, Generic Device API, with the generic protocol unit 110. The generic protocol unit 110 adapts the communication for each respective specific protocol unit 130, e.g. UPnP, CoAP, or Z-wave. According to the figure, the generic application 150 may transmit a signal "ON", or "OFF" to the GDA with the generic protocol unit 110. Further, the generic protocol unit 110 may receive a "READING" from the GDA. According to the example, the "ON", "OFF" and "READING" are in a generic format between the generic protocol unit 110 and the generic device 110. The communication is however adapted by each specific protocol unit 130, to support specific devices 140. An example is an application for light switching with "READING" detection if the switch is in mode "ON" or "OFF". This is just an illustrative example, and not limiting other applications.

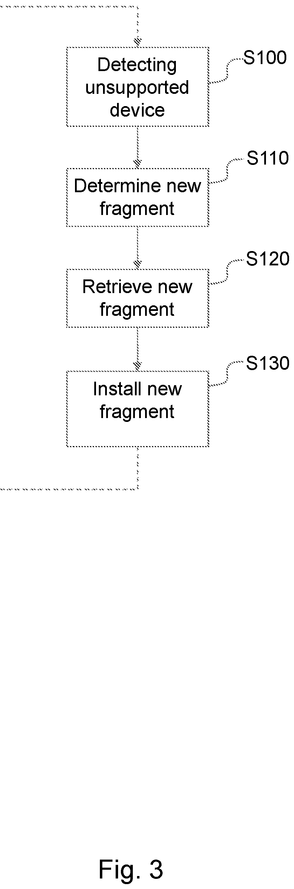

A procedure in a protocol adaptor system 100 will now be described with reference to Fig. 3. In a first step S100, it is determined that a newly connected device 140 is unsupported by the specific protocol. An unsupported device 140 may include that a bit in a service schema is missing, all the way to no communication at all, with the new device 140. The device 140 uses a variant of the specific protocol, which is unsupported. In a next step S110 it is determined what fragment that is needed to adapt the specific protocol, in order for the specific protocol to support communication adaptation, for the unsupported device 140. Hence, the variant of the specific protocol may be required to utilize a full feature set of a new device 140. The term variant may include protocol version, protocol extension, protocol adaptation, protocol feature set, protocol schema, not limiting the term variant to other similar meanings. In S120 a new fragment is retrieved from a protocol provider unit. The new fragment intended for enablement of communication with the new unknown device. In step S130 the new fragment is installed in a specific protocol unit, i.e. the specific protocol unit that has been provided with a new fragment supporting the newly connected device. Thereby communication with the new device is enabled for generic applications 150, via the protocol adaptor system 100.

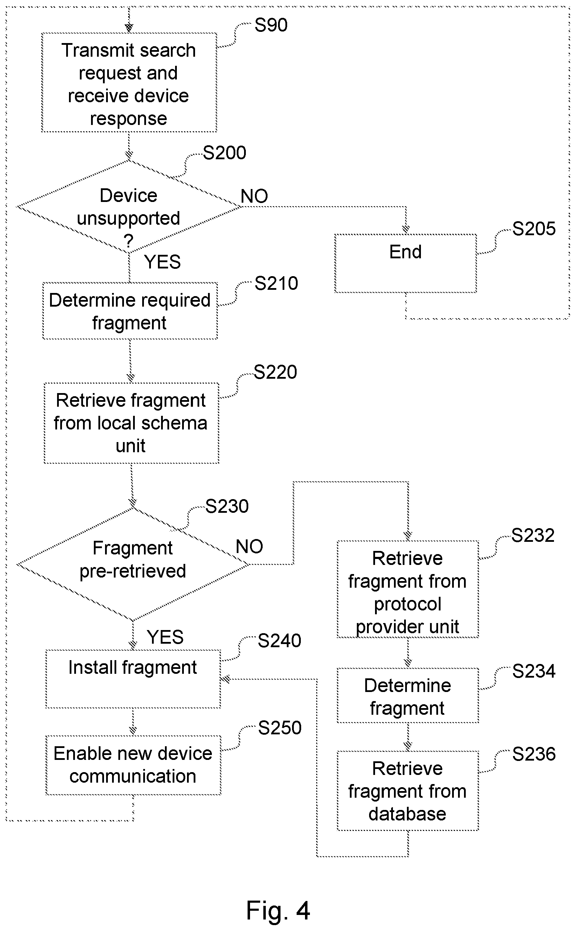

Fig. 4 shows a more detailed example of a procedure performed by a protocol adaptor system 100. In a first step S90 a search request is transmitted by the specific protocol unit, and responses may be received from known and new devices. In a next step S200 it may be determined, by the generic protocol unit, if it is a new unknown device that has responded to the search request, or an already known device. If it is determined that the device already is known, the procedure is ended in step S205. If it is determined that the device is new and unknown, the procedure may continue to step S210. In step S210 it may be determined by the local schema unit which fragment that is needed for enablement of communication with the new unknown device. In a next step S220 the generic protocol unit retrieves the determined fragment from the local schema unit. If the fragment is pre-retrieved and stored in the local schema unit, the procedure may proceed to step S240. If the fragment is not pre-retrieved, or if a needed fragment has not been determined by the local schema unit, the procedure may continue to step S232.

In step S232 the local schema unit transmits a fragment retrieval request to the protocol provider unit. The request may include information about the device. In step S234 it is determined by the service schema unit, which fragment that is needed by a specific protocol unit for enablement of communication with a new unknown device. In step S236 the determined fragment is retrieved from the fragment database and transferred to the local schema unit. In step S240 the fragment is installed in the specific protocol unit. In step S250 is communication with the new device enabled, and generic applications may communicate with the new connected device.

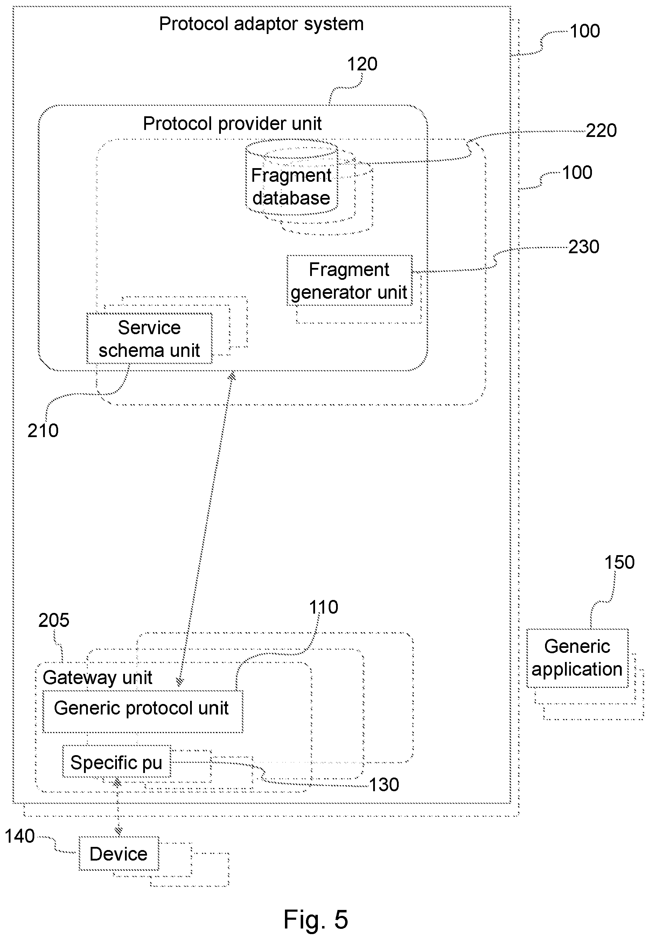

Fig. 5 shows an illustrative embodiment of a clustered protocol adaptor system 100. A system may be implemented in various ways. It may be implemented on a single unit/host like a PC or an application server host or similar electronic device, or in a large scale environment with requirements on many transactions and redundancy. This is generally valid for most systems. For the clustered protocol adaptor system 100, a clustered or hierarchical structure may however serve different purposes. According to Fig. 5, the protocol adaptor system 100, related generic applications 150, and devices 140 160, there may be a plurality of units, as well a plurality of protocol adaptor system 100 cooperating.

The clustered protocol adaptor system 100 as shown in Fig 5, may include a plurality of gateway units 205 per protocol provider unit 120. Each gateway unit 205 may connect to a varied plurality of devices 140 and consumer applications 150. Service schema units 210 may be distributed in a large network solution and different service schema units 210 may serve different types of gateway units 205. Fragment databases 220 may be replicated between a plurality of central office nodes in a network. According to an embodiment a single fragment generator unit 230, may serve a plurality of service schema units 210 and a plurality of fragment databases 220. Not limiting other architectural solutions of how to set up or structure a protocol adaptor system 100.

While the solution has been described with reference to specific exemplary embodiments, the description is generally only intended to illustrate the inventive concept and should not be taken as limiting the scope of the solution. For example, the terms "generic protocol unit", "protocol provider unit", "generic application", and "device" have been used throughout this description, although any other corresponding nodes, functions, and/or parameters could also be used having the features and characteristics described here. The solution is defined by the appended claims.

## Claims

1. A method performed by a protocol adaptor system (100) for handling a device (140) to communicate with a generic application (150) in a communications network where the generic application (150) uses a generic protocol, the method being **characterized in that** it comprises:
- detecting that the device (140) uses a variant of a specific protocol of a specific protocol unit (130) in the protocol adaptor system (100) and that the variant is unsupported by the specific protocol unit (130),
- determining that a new fragment is required for communication adaptation of the specific protocol, wherein the new fragment is one of: a piece of computer program code in script or binary format, an extension to an already excising protocol, a service schema for mapping of service extensions, a table mapping different service features, and a text string,
- in response to determining that the new fragment is required for the communication adaptation of the specific protocol, determining which fragment is required for the communication adaptation of the specific protocol,
- in response to determining a particular fragment required for the communication adaptation of the specific protocol, retrieving the particular fragment needed for the communication adaptation of the specific protocol to the variant, and
- installing the particular fragment in the specific protocol unit (130), thereby enabling the communication between the generic application (150) and the device (140),
wherein when the protocol adaptor system (100) fails to determine which fragment is required for the communication adaptation of the specific protocol, the method further comprises:
transmitting a request to a protocol provider unit (120) in the protocol adaptor system (100) for determining the particular fragment required to enable the communication between the generic application (150) and the device (140), wherein the request comprises device information, and
receiving the particular fragment from the protocol provider unit (120) for installation of the particular fragment in the specific protocol unit (130).

2. The method according to claim 1, wherein when the protocol adaptor system (100) fails to determine which fragment is required for the communication adaptation of the specific protocol, the method further comprises transmitting of a search request to and reception of a response from the device (140), by the specific protocol unit (130).

3. The method according to any of claim 1 or 2, wherein determining the particular fragment required for the communication adaptation of the specific protocol comprises determining, based on the device information, the particular fragment required to enable the communication between the generic application (150) and the device (140), by a local schema unit (200) in a generic protocol unit (110) of the protocol adaptor system (100), wherein the local schema unit (200) stores a plurality of fragments from a remote management unit (260) via a gateway management unit (265) of the protocol adaptor system (100).

4. The method according to any of claims 1 to 3, wherein when the protocol adaptor system (100) fails to determine which fragment is required for the communication adaptation of the specific protocol, the method further comprises receiving the request comprising the device information by a service schema unit (210) in the protocol provider unit (120), and determining the particular fragment required to enable the communication between the generic application (150) and the device (140), based on the device information.

5. The method according to claim 3 or 4, further comprising pre-retrieving, by the local schema unit (200), a fragment which is likely to be required for future new devices, wherein the pre-retrieving is performed based on at least one of: a specific radio interface of the protocol adaptor system (100) that supports connection of the future devices to the protocol adaptor system (100), and a usage of a specific fragment reaching a particular threshold, and wherein determining the fragment to pre-retrieve is determined by the protocol provider unit (120).

6. A protocol adaptor system (100) configured to handle a device (140) to communicate with a generic application (150) in a communications network where the generic application (150) uses a generic protocol unit (110),
the protocol adaptor system being **characterized in that**
the generic protocol unit (110) is arranged to detect that the device (140) uses a variant of a specific protocol of a specific protocol unit (130) in the protocol adaptor system (100) and that the variant is unsupported by the specific protocol unit (130),
the generic protocol unit (110) is further arranged to determine that a new fragment is required for communication adaptation of the specific protocol, wherein the new fragment is one of: a piece of computer program code in script or binary format, an extension to an already excising protocol, a service schema for mapping of service extensions, a table mapping different service features, and a text string,
the generic protocol unit (110) is further arranged, in response to a determination that the new fragment is required for the communication adaptation of the specific protocol, to determine which fragment is required for the communication adaptation of the specific protocol,
the generic protocol unit (110) is further arranged, in response to a determination of a particular fragment required for the communication adaptation of the specific protocol, to retrieve the particular fragment needed for the communication adaptation of the specific protocol to the variant, from a protocol provider unit (120) in the protocol adaptor system (100), and
the generic protocol unit (110) is further arranged to install the particular fragment in the specific protocol unit (130), thereby enabling the communication between the generic application (150) and the device (140),
wherein the generic protocol unit (110) is further arranged, when the generic protocol unit (110) fails to determine which fragment is required for the communication adaptation of the specific protocol, to:
transmit a request to the protocol provider unit (120) for determining the particular fragment required to enable the communication between the generic application (150) and the device (140), wherein the request comprises device information; and
receive the particular fragment from the protocol provider unit (120) for installation of the particular fragment in the specific protocol unit (130).

7. The protocol adaptor system (100) according to claim 6, wherein the generic protocol unit (110) is further arranged, when the generic protocol unit (110) fails to determine which fragment is required for the communication adaptation of the specific protocol, to transmit a search request to, and to receive a response from, the device (140).

8. The protocol adaptor system (100) according to claim 6 or 7, wherein for the determination of the particular fragment required for the communication adaptation of the specific protocol, the generic protocol unit (110) comprises a local schema unit (200) which is arranged to determine, based on the device information, the particular fragment required to enable the communication between the generic application (150) and the device (140), and wherein the local schema unit (200) is arranged to store a plurality of fragments from a remote management unit (260) via a gateway management unit (265) of the protocol adaptor system (100).

9. The protocol adaptor system (100) according to claim 8, wherein the generic protocol unit (110) is arranged to retrieve the determined particular fragment from the local schema unit (200) to the specific protocol unit (130).

10. The protocol adaptor system (100) according to claim 8 or 9, wherein the local schema unit (200) is further arranged to transmit a request to the protocol provider unit (120) when the local schema unit (200) fails to determine the particular fragment.

11. The protocol adaptor system (100) according to any of claims 6 to 10, wherein the generic protocol unit (110) is further arranged, when the generic protocol unit (110) fails to determine which fragment is required for the communication adaptation of the specific protocol, the protocol provider unit (120) comprising a service schema unit (210), to receive the request comprising the device information, and to determine the particular fragment required to enable the communication between the generic application (150) and the device (140), based on the device information.

12. The protocol adaptor system (100) according to claim 11, wherein the service schema unit (210) is further arranged to retrieve the determined particular fragment from a fragment database (220).

13. The protocol adaptor system (100) according to claim 11 or 12, wherein the protocol provider unit (120) is arranged to deliver the requested particular fragment to the local schema unit (200).

14. The protocol adaptor system (100) according to claim 12 or 13, wherein a fragment generator unit (230) is arranged to generate a fragment which associates the generated fragment with the device (140) and to store the generated fragment in the fragment database (220).

15. The protocol adaptor system (100) according to any of claims 8 to 14, wherein the local schema unit (200) is arranged to pre-retrieve a fragment which is likely to be required for future new devices, wherein the local schema unit (200) is arranged to pre-retrieve the fragment based on at least one of: a specific radio interface of the protocol adaptor system (100) that supports connection of the future devices to the protocol adaptor system (100), and a usage of a specific fragment reaching a particular threshold, and wherein the protocol provider unit (120) determines the fragment to pre-retrieve.

16. A computer program, comprising computer readable code means for handling a device (140) to communicate with a generic application (150) in a communications network where the generic application (150) uses a generic protocol, which computer program is **characterized in that** it causes a protocol adaptor system (100) to perform the following steps when executed on the protocol adaptor system (100):
- detecting that the device (140) uses a variant of a specific protocol of a specific protocol unit (130) in the protocol adaptor system (100) and that the variant is unsupported by the specific protocol unit (130),
- determining that a new fragment is required for communication adaptation of the specific protocol, wherein the new fragment is one of: a piece of computer program code in script or binary format, an extension to an already excising protocol, a service schema for mapping of service extensions, a table mapping different service features, and a text string,
- in response to determining that the new fragment is required for the communication adaptation of the specific protocol, determining which fragment is required for the communication adaptation of the specific protocol,
- in response to determining a particular fragment required for the communication adaptation of the specific protocol, retrieving the particular fragment needed for the communication adaptation of the specific protocol to the variant,
- installing the particular fragment in the specific protocol unit (130), thereby enabling the communication between the generic application (150) and the device (140),
wherein when the protocol adaptor system (100) fails to determine which fragment is required for the communication adaptation of the specific protocol, the computer program causes the protocol adaptor system (100) to perform the following steps:
transmitting a request to a protocol provider unit (120) in the protocol adaptor system (100) for determining the particular fragment required to enable the communication between the generic application (150) and the device (140), wherein the request comprises device information, and
receiving the particular fragment from the protocol provider unit (120) for installation of the particular fragment in the specific protocol unit (130).

## Patentansprüche

1. Durch ein Protokollanpassungssystem (100) durchgeführtes Verfahren zur Handhabung einer Vorrichtung (140), um mit einer generischen Anwendung (150) in einem Kommunikationsnetzwerk, in dem die generische Anwendung (150) ein generisches Protokoll verwendet, zu kommunizieren, wobei das Verfahren **dadurch gekennzeichnet ist, dass** es Folgendes umfasst:
- Erfassen, dass die Vorrichtung (140) eine Variante eines spezifischen Protokolls einer spezifischen Protokolleinheit (130) in dem Protokollanpassungssystem (100) verwendet und dass die Variante von der spezifischen Protokolleinheit (130) nicht unterstützt wird,
- Bestimmen, dass ein neues Fragment für die Kommunikationsanpassung des spezifischen Protokolls erforderlich ist, wobei das neue Fragment eines von Folgenden ist: ein Teil eines Computerprogrammcodes in Skript- oder Binärformat, eine Erweiterung eines bereits vorhandenen Protokolls, ein Dienstschema zur Abbildung von Diensterweiterungen, eine Tabelle, die unterschiedliche Dienstmerkmale abbildet, und ein Textstring,
- als Reaktion auf das Bestimmen, dass das neue Fragment für die Kommunikationsanpassung des spezifischen Protokolls erforderlich ist, Bestimmen welches Fragment für die Kommunikationsanpassung des spezifischen Protokolls erforderlich ist,
- als Reaktion auf das Bestimmen eines bestimmten Fragments, das für die Kommunikationsanpassung des spezifischen Protokolls erforderlich ist, Abrufen des bestimmten Fragments, das für die Kommunikationsanpassung des spezifischen Protokolls an die Variante benötigt wird, und
- Installieren des bestimmten Fragments in der spezifischen Protokolleinheit (130), wodurch die Kommunikation zwischen der generischen Anwendung (150) und der Vorrichtung (140) ermöglicht wird,
wobei, wenn das Protokollanpassungssystem (100) nicht bestimmt welches Fragment für die Kommunikationsanpassung des spezifischen Protokolls erforderlich ist, das Verfahren ferner Folgendes umfasst:
Übertragen einer Anfrage an eine Protokollbereitstellungseinheit (120) in dem Protokollanpassungssystem (100) zum Bestimmen des bestimmten Fragments, das erforderlich ist, um die Kommunikation zwischen der generischen Anwendung (150) und der Vorrichtung (140) zu ermöglichen, wobei die Anfrage Vorrichtungsinformationen umfasst, und
Empfangen des bestimmten Fragments von der Protokollbereitstellungseinheit (120) zur Installation des bestimmten Fragments in der spezifischen Protokolleinheit (130) .

2. Verfahren nach Anspruch 1, wobei, wenn das Protokollanpassungssystem (100) nicht bestimmt welches Fragment für die Kommunikationsanpassung des spezifischen Protokolls erforderlich ist, das Verfahren ferner Folgendes umfasst: Übertragen einer Suchanfrage an die und Empfangen einer Antwort von der Vorrichtung (140) durch die spezifische Protokolleinheit (130).

3. Verfahren nach einem der Ansprüche 1 oder 2, wobei das Bestimmen des bestimmten Fragments, das für die Kommunikationsanpassung des spezifischen Protokolls erforderlich ist, Folgendes umfasst: Bestimmen des bestimmten Fragments, das erforderlich ist, um die Kommunikation zwischen der generischen Anwendung (150) und der Vorrichtung (140) zu ermöglichen, auf Grundlage der Vorrichtungsinformationen durch eine lokale Schemaeinheit (200) in einer generischen Protokolleinheit (110) des Protokollanpassungssystems (100), wobei die lokale Schemaeinheit (200) eine Vielzahl von Fragmenten von einer entfernten Verwaltungseinheit (260) über eine Gateway-Verwaltungseinheit (265) des Protokollanpassungssystems (100) speichert.

4. Verfahren nach einem der Ansprüche 1 bis 3, wobei, wenn das Protokollanpassungssystem (100) nicht bestimmt welches Fragment für die Kommunikationsanpassung des spezifischen Protokolls erforderlich ist, das Verfahren ferner Folgendes umfasst: Empfangen der Anfrage, die die Geräteinformationen umfasst, durch eine Dienstschemaeinheit (210) in der Protokollbereitstellungseinheit (120) und Bestimmen des bestimmten Fragments, das erforderlich ist, um die Kommunikation zwischen der generischen Anwendung (150) und der Vorrichtung (140) zu ermöglichen, auf Grundlage der Vorrichtungsinformationen.

5. Verfahren nach Anspruch 3 oder 4, ferner umfassend Vorabrufen eines Fragments, von dem es wahrscheinlich ist, dass es für zukünftige neue Vorrichtungen erforderlich ist, durch die lokale Schemaeinheit (200), wobei das Vorabrufen auf Grundlage von zumindest einem von Folgenden durchgeführt wird: einer spezifischen Funkschnittstelle des Protokollanpassungssystems (100), die die Verbindung der zukünftigen Vorrichtungen mit dem Protokollanpassungssystem (100) unterstützt, und einer Verwendung eines spezifischen Fragments, das einen bestimmten Schwellenwert erreicht, und wobei das Bestimmen des vorabzurufenden Fragments durch die Protokollbereitstellungseinheit (120) bestimmt wird.

6. Protokollanpassungssystem (100), das dazu konfiguriert ist, eine Vorrichtung (140) zu handhaben, um mit einer generischen Anwendung (150) in einem Kommunikationsnetzwerk, in dem die generische Anwendung (150) eine generische Protokolleinheit (110) verwendet, zu kommunizieren, wobei das Protokollanpassungssystem **dadurch gekennzeichnet ist, dass** die generische Protokolleinheit (110) dazu ausgebildet ist, zu erfassen, dass die Vorrichtung (140) eine Variante eines spezifischen Protokolls einer spezifischen Protokolleinheit (130) in dem Protokollanpassungssystem (100) verwendet und dass die Variante von der spezifischen Protokolleinheit (130) nicht unterstützt wird,
die generische Protokolleinheit (110) ferner dazu ausgebildet ist, zu bestimmen, dass ein neues Fragment für die Kommunikationsanpassung des spezifischen Protokoll erforderlich ist, wobei das neue Fragment eines von Folgenden ist: ein Teil eines Computerprogrammcodes in Skript- oder Binärformat, eine Erweiterung eines bereits vorhandenen Protokolls, ein Dienstschema zur Abbildung von Diensterweiterungen, eine Tabelle, die unterschiedliche Dienstmerkmale abbildet, und ein Textstring,
die generische Protokolleinheit (110) ferner dazu ausgebildet ist, als Reaktion auf das Bestimmen, dass das neue Fragment für die Kommunikationsanpassung des spezifischen Protokolls erforderlich ist, zu bestimmen welches Fragment für die Kommunikationsanpassung des spezifischen Protokolls erforderlich ist,
die generische Protokolleinheit (110) ferner dazu ausgebildet ist, als Reaktion auf das Bestimmen eines bestimmten Fragments, das für die Kommunikationsanpassung des spezifischen Protokolls erforderlich ist, das bestimmte Fragment, das für die Kommunikationsanpassung des spezifischen Protokolls an die Variante benötigt wird, von einer Protokollbereitstellungseinheit (120) in dem Protokollanpassungssystem (100) abzurufen, und
die generische Protokolleinheit (110) ferner dazu ausgebildet ist, das bestimmte Fragment in der spezifischen Protokolleinheit (130) zu installieren, wodurch die Kommunikation zwischen der generischen Anwendung (150) und der Vorrichtung (140) ermöglicht wird,
wobei, wenn die generische Protokolleinheit (110) nicht bestimmt welches Fragment für die Kommunikationsanpassung des spezifischen Protokolls erforderlich ist, die generische Protokolleinheit (110) ferner zu Folgendem ausgebildet ist:
Übertragen einer Anfrage an die Protokollbereitstellungseinheit (120) zum Bestimmen des bestimmten Fragments, das erforderlich ist, um die Kommunikation zwischen der generischen Anwendung (150) und der Vorrichtung (140) zu ermöglichen, wobei die Anforderung Vorrichtungsinformationen umfasst; und
Empfangen des bestimmten Fragments von der Protokollbereitstellungseinheit (120) zur Installation des bestimmten Fragments in der spezifischen Protokolleinheit (130) .

7. Protokollanpassungssystem (100) nach Anspruch 6, wobei die generische Protokolleinheit (110) ferner dazu ausgebildet ist, wenn die generische Protokolleinheit (110) nicht bestimmt welches Fragment für die Kommunikationsanpassung des spezifischen Protokolls erforderlich ist, eine Suchanfrage an die Vorrichtung (140) zu übertragen und eine Antwort von dieser zu empfangen.

8. Protokollanpassungssystem (100) nach Anspruch 6 oder 7, wobei zur Bestimmung der bestimmten Fragments, das für die Kommunikationsanpassung des spezifischen Protokolls erforderlich ist, die generische Protokolleinheit (110) eine lokale Schemaeinheit (200) umfasst, die dazu ausgebildet ist, das bestimmte Fragment, das erforderlich ist, um die Kommunikation zwischen der generischen Anwendung (150) und der Vorrichtung (140) zu ermöglichen, auf Grundlage der Vorrichtungsinformationen zu bestimmen, und wobei die lokale Schemaeinheit (200) dazu ausgebildet ist, eine Vielzahl von Fragmenten in einer entfernten Verwaltungseinheit (260) über eine Gateway-Verwaltungseinheit (265) des Protokollanpassungssystems (100) zu speichern.

9. Protokollanpassungssystem (100) nach Anspruch 8, wobei die generische Protokolleinheit (110) dazu ausgebildet ist, das bestimmte Fragment, das bestimmt wurde, von der lokalen Schemaeinheit (200) an die spezifische Protokolleinheit (130) abzurufen.

10. Protokollanpassungssystem (100) nach Anspruch 8 oder 9, wobei die lokale Schemaeinheit (200) ferner dazu ausgebildet ist, eine Anfrage an die Protokollbereitstellungseinheit (120) zu übertragen, wenn die lokale Schemaeinheit (200) das bestimmte Fragment nicht bestimmt.

11. Protokollanpassungssystem (100) nach einem der Ansprüche 6 bis 10, wobei die generische Protokolleinheit (110) ferner dazu ausgebildet ist, wenn die generisch Protokolleinheit (110) nicht bestimmt welches Fragment für die Kommunikationsanpassung des spezifischen Protokolls erforderlich ist, die Protokollbereitstellungseinheit (120)die eine Dienstschemaeinheit (210) umfasst, die Anfrage, die die Vorrichtungsinformationen umfasst, zu empfangen und das bestimmte Fragment, das erforderlich ist, um die Kommunikation zwischen der generischen Anwendung(150) und der Vorrichtung (140) zu ermöglichen auf Grundlage der Vorrichtungsinformationen zu bestimmen.

12. Protokollanpassungssystem (100) nach Anspruch 11, wobei die Dienstschemaeinheit (210) ferner dazu ausgebildet ist, das bestimmte Fragment, das bestimmt wurde, aus einer Fragmentdatenbank (220) abzurufen.

13. Protokollanpassungssystem (100) nach Anspruch 11 oder 12, wobei die Protokollbereitstellungseinheit (120) dazu ausgebildet ist, das angefragte bestimmte Fragment an die lokale Schemaeinheit (200) zu liefern.

14. Protokollanpassungssystem (100) nach Anspruch 12 oder 13, wobei eine Fragmenterzeugungseinheit (230) dazu ausgebildet ist, ein Fragment zu erzeugen, das das erzeugte Fragment der Vorrichtung (140) zuordnet, und das erzeugte Fragment in der Fragmentdatenbank (220) zu speichern.

15. Protokollanpassungssystem (100) nach einem der Ansprüche 8 bis 14, wobei die lokale Schemaeinheit (200) dazu ausgebildet ist, ein Fragment, von dem es wahrscheinlich ist, dass es für zukünftige neue Vorrichtungen erforderlich ist, vorabzurufen, wobei die lokale Schemaeinheit (200) dazu ausgebildet ist, das Fragment auf Grundlage von zumindest einem von Folgenden vorabzurufen: einer spezifischen Funkschnittstelle des Protokollanpassungssystems (100), die die Verbindung der zukünftigen Vorrichtungen mit dem Protokollanpassungssystem (100) unterstützt, und einer Verwendung eines spezifischen Fragments, das einen bestimmten Schwellenwert erreicht, und wobei Protokollbereitstellungseinheit (120) das vorabzurufende Fragment bestimmt.

16. Computerprogramm, umfassend computerlesbare Codemittel zur Handhabung einer Vorrichtung (140), um mit einer generischen Anwendung (150) in einem Kommunikationsnetzwerk, in dem die generische Anwendung (150) ein generisches Protokoll verwendet, zu kommunizieren, wobei das Computerprogramm **dadurch gekennzeichnet ist, dass** es ein Protokollanpassungssystem (100) veranlasst, die folgenden Schritte durchzuführen, wenn es auf dem Protokollanpassungssystem (100) ausgeführt wird:
- Erfassen, dass die Vorrichtung (140) eine Variante eines spezifischen Protokolls einer spezifischen Protokolleinheit (130) in dem Protokollanpassungssystem (100) verwendet und dass die Variante von der spezifischen Protokolleinheit (130) nicht unterstützt wird,
- Bestimmen, dass ein neues Fragment für die Kommunikationsanpassung des spezifischen Protokolls erforderlich ist, wobei das neue Fragment eines von Folgenden ist: ein Teil eines Computerprogrammcodes in Skript- oder Binärformat, eine Erweiterung eines bereits vorhandenen Protokolls, ein Dienstschema zur Abbildung von Diensterweiterungen, eine Tabelle, die unterschiedliche Dienstmerkmale abbildet, und ein Textstring,
- als Reaktion auf das Bestimmen, dass das neue Fragment für die Kommunikationsanpassung des spezifischen Protokolls erforderlich ist, Bestimmen welches Fragment für die Kommunikationsanpassung des spezifischen Protokolls erforderlich ist,
- als Reaktion auf das Bestimmen eines bestimmten Fragments, das für die Kommunikationsanpassung des spezifischen Protokolls erforderlich ist, Abrufen des bestimmten Fragments, das für die Kommunikationsanpassung des spezifischen Protokolls an die Variante benötigt wird,
- Installieren des bestimmten Fragments in der spezifischen Protokolleinheit (130), wodurch die Kommunikation zwischen der generischen Anwendung (150) und der Vorrichtung (140) ermöglicht wird,
wobei, wenn das Protokollanpassungssystem (100) nicht bestimmt welches Fragment für die Kommunikationsanpassung des spezifischen Protokolls erforderlich ist, das Computerprogramm das Protokollanpassungssystem (100) veranlasst, die folgenden Schritte durchzuführen:
Übertragen einer Anfrage an eine Protokollbereitstellungseinheit (120) in dem Protokollanpassungssystem (100) zum Bestimmen des bestimmten Fragments, das erforderlich ist, um die Kommunikation zwischen der generischen Anwendung (150) und der Vorrichtung (140) zu ermöglichen, wobei die Anfrage Vorrichtungsinformationen umfasst, und
Empfangen des bestimmten Fragments von der Protokollbereitstellungseinheit (120) zur Installation des bestimmten Fragments in der spezifischen Protokolleinheit (130) .

## Revendications

1. Procédé exécuté par un système adaptateur de protocole (100) pour gérer un périphérique (140) afin de communiquer avec une application générique (150) dans un réseau de communication où l'application générique (150) utilise un protocole générique, le procédé étant **caractérisé en ce qu'**il comprend :
- la détection que le périphérique (140) utilise une variante d'un protocole spécifique d'une unité de protocole spécifique (130) dans le système adaptateur de protocole (100) et que la variante n'est pas prise en charge par l'unité de protocole spécifique (130),
- la détermination qu'un nouveau fragment est requis pour l'adaptation de communication du protocole spécifique, dans lequel le nouveau fragment est l'un des éléments suivants : un code de programme d'ordinateur au format script ou binaire, une extension d'un protocole déjà en cours d'exécution, un schéma de service pour le mappage des extensions de service, une table mappant différentes fonctionnalités du service et une chaîne de texte,
- en réponse à la détermination que le nouveau fragment est requis pour l'adaptation de communication du protocole spécifique, le fait de déterminer quel fragment est requis pour l'adaptation de communication du protocole spécifique,
- en réponse à la détermination d'un fragment particulier requis pour l'adaptation de communication du protocole spécifique, l'extraction du fragment particulier nécessaire à l'adaptation de communication du protocole spécifique à la variante, et
- l'installation du fragment particulier dans l'unité de protocole spécifique (130), permettant ainsi la communication entre l'application générique (150) et le périphérique (140),
- dans lequel, lorsque le système adaptateur de protocole (100) ne parvient pas à déterminer quel fragment est requis pour l'adaptation de communication du protocole spécifique, le procédé comprend en outre :
- la transmission d'une requête à une unité de fournisseur de protocole (120) dans le système adaptateur de protocole (100) pour déterminer le fragment particulier requis pour permettre la communication entre l'application générique (150) et le périphérique (140), la requête comprenant des informations sur le périphérique, et
- la réception du fragment particulier de l'unité de fournisseur de protocole (120) pour l'installation du fragment particulier dans l'unité de protocole spécifique (130).

2. Procédé selon la revendication 1, dans lequel, lorsque le système adaptateur de protocole (100) ne parvient pas à déterminer quel fragment est requis pour l'adaptation de communication du protocole spécifique, le procédé comprend en outre la transmission d'une requête de recherche au périphérique (140) et la réception d'une réponse de celui-ci, par l'unité de protocole spécifique (130).

3. Procédé selon l'une quelconque des revendications 1 ou 2, dans lequel la détermination du fragment particulier requis pour l'adaptation de communication du protocole spécifique comprend la détermination, sur la base des informations sur le périphérique, du fragment particulier requis pour permettre la communication entre l'application générique (150) et le périphérique (140), par une unité de schéma local (200) dans une unité de protocole générique (110) du système adaptateur de protocole (100), dans lequel l'unité de schéma local (200) stocke une pluralité de fragments provenant d'une unité de gestion à distance (260) par l'intermédiaire d'une unité de gestion de passerelle (265) du système adaptateur de protocole (100) .

4. Procédé selon l'une quelconque des revendications 1 à 3, dans lequel, lorsque le système adaptateur de protocole (100) ne parvient pas à déterminer quel fragment est requis pour l'adaptation de communication du protocole spécifique, le procédé comprend en outre la réception de la demande comprenant les informations sur le périphérique par une unité de schéma de service (210) dans l'unité de fournisseur de protocole (120), et la détermination du fragment particulier requis pour permettre la communication entre l'application générique (150) et le périphérique (140), sur la base des informations sur le périphérique.

5. Procédé selon la revendication 3 ou 4, comprenant en outre la pré-extraction, par l'unité de schéma local (200), d'un fragment qui est susceptible d'être requis pour de futurs nouveaux périphériques, dans lequel la pré-extraction est effectuée sur la base d'au moins l'une parmi : une interface radio spécifique du système adaptateur de protocole (100) prenant en charge la connexion des futurs périphériques au système adaptateur de protocole (100) et une utilisation d'un fragment spécifique atteignant un seuil particulier, et dans lequel la détermination du fragment à pré-extraire est déterminée par l'unité de fournisseur de protocole (120).

6. Système adaptateur de protocole (100) conçu pour gérer un périphérique (140) afin de communiquer avec une application générique (150) dans un réseau de communication où l'application générique (150) utilise une unité de protocole générique (110), le système adaptateur de protocole étant **caractérisé en ce que**
l'unité de protocole générique (110) est agencée pour détecter que le périphérique (140) utilise une variante d'un protocole spécifique d'une unité de protocole spécifique (130) dans le système adaptateur de protocole (100) et que la variante n'est pas prise en charge par l'unité de protocole spécifique (130), l'unité de protocole générique (110) est en outre agencée pour déterminer qu'un nouveau fragment est requis pour l'adaptation de communication du protocole spécifique, dans lequel le nouveau fragment est l'un des éléments suivants : un morceau de code de programme informatique au format script ou binaire, une extension d'un protocole déjà en cours d'exécution, un schéma de service pour le mappage des extensions de service, une table mappant différentes fonctionnalités du service et une chaîne de texte,
l'unité de protocole générique (110) est en outre agencée, en réponse à une détermination que le nouveau fragment est requis pour l'adaptation de communication du protocole spécifique, afin de déterminer quel fragment est requis pour l'adaptation de communication du protocole spécifique, l'unité de protocole générique (110) est en outre agencée, en réponse à une détermination d'un fragment particulier requis pour l'adaptation de communication du protocole spécifique, pour extraire le fragment particulier nécessaire pour l'adaptation de communication du protocole spécifique à la variante, à partir d'une unité de fournisseur de protocole (120) dans le système adaptateur de protocole (100), et
l'unité de protocole générique (110) est en outre agencée pour installer le fragment particulier dans l'unité de protocole spécifique (130), permettant ainsi la communication entre l'application générique (150) et le périphérique (140),
dans lequel l'unité de protocole générique (110) est en outre agencée, lorsque l'unité de protocole générique (110) ne parvient pas à déterminer quel fragment est requis pour l'adaptation de communication du protocole spécifique, pour :
transmettre une requête à l'unité de fournisseur de protocole (120) pour déterminer le fragment particulier requis pour permettre la communication entre l'application générique (150) et le périphérique (140), dans lequel la requête comprend des informations sur le périphérique ; et
recevoir le fragment particulier de l'unité de fournisseur de protocole (120) pour l'installation du fragment particulier dans l'unité de protocole spécifique (130).

7. Système adaptateur de protocole (100) selon la revendication 6, dans lequel l'unité de protocole générique (110) est en outre agencée, lorsque l'unité de protocole générique (110) ne parvient pas à déterminer quel fragment est requis pour l'adaptation de communication du protocole spécifique, pour transmettre une requête de recherche au périphérique (140) et pour recevoir une réponse de celui-ci.

8. Système adaptateur de protocole (100) selon la revendication 6 ou 7, dans lequel, pour la détermination du fragment particulier requis pour l'adaptation de communication du protocole spécifique, l'unité de protocole générique (110) comprend une unité de schéma local (200) qui est agencée pour déterminer, sur la base des informations sur le périphérique, le fragment particulier requis pour permettre la communication entre l'application générique (150) et le périphérique (140), et dans lequel l'unité de schéma local (200) est agencée pour stocker une pluralité de fragments depuis une unité de gestion à distance (260) par l'intermédiaire d'une unité de gestion de passerelle (265) du système adaptateur de protocole (100).

9. Système adaptateur de protocole (100) selon la revendication 8, dans lequel l'unité de protocole générique (110) est agencée pour extraire le fragment particulier déterminé de l'unité de schéma local (200) vers l'unité de protocole spécifique (130).

10. Système adaptateur de protocole (100) selon la revendication 8 ou 9, dans lequel l'unité de schéma local (200) est en outre agencée pour transmettre une requête à l'unité de fournisseur de protocole (120) lorsque l'unité de schéma local (200) ne parvient pas à déterminer le fragment particulier.

11. Système adaptateur de protocole (100) selon l'une quelconque des revendications 6 à 10, dans lequel l'unité de protocole générique (110) est en outre agencée, lorsque l'unité de protocole générique (110) ne parvient pas à déterminer quel fragment est requis pour l'adaptation de communication du protocole spécifique, l'unité de fournisseur de protocole (120) comprenant une unité de schéma de service (210), afin de recevoir la demande comprenant les informations sur le périphérique, et pour déterminer le fragment particulier requis pour permettre la communication entre l'application générique (150) et le périphérique (140), sur la base des informations sur le périphérique.

12. Système adaptateur de protocole (100) selon la revendication 11, dans lequel l'unité de schéma de service (210) est en outre agencée pour extraire le fragment particulier déterminé d'une base de données de fragment (220).

13. Système adaptateur de protocole (100) selon la revendication 11 ou 12, dans lequel l'unité de fournisseur de protocole (120) est agencée pour délivrer le fragment particulier demandé à l'unité de schéma local (200).

14. Système adaptateur de protocole (100) selon la revendication 12 ou 13, dans lequel une unité de génération de fragments (230) est agencée pour générer un fragment qui associe le fragment généré au périphérique (140) et pour stocker le fragment généré dans la base de données de fragment (220) .

15. Système adaptateur de protocole (100) selon l'une quelconque des revendications 8 à 14, dans lequel l'unité de schéma local (200) est agencée pour pré-extraire un fragment qui sera probablement nécessaire pour de futurs nouveaux périphériques, dans lequel l'unité de schéma local (200) est conçue pour pré-extraire le fragment sur la base d'au moins l'une parmi : une interface radio spécifique du système adaptateur de protocole (100) prenant en charge la connexion des futurs périphériques au système adaptateur de protocole (100), et une utilisation d'un fragment spécifique atteignant un seuil particulier, et dans lequel l'unité de fournisseur de protocole (120) détermine le fragment à pré-extraire.

16. Programme d'ordinateur, comprenant un moyen de code lisible par ordinateur pour manipuler un périphérique (140) afin de communiquer avec une application générique (150) dans un réseau de communication où l'application générique (150) utilise un protocole générique, lequel programme d'ordinateur est **caractérisé en ce qu'**il amène un système adaptateur de protocole (100) à effectuer les étapes suivantes lorsqu'il est exécuté sur le système adaptateur de protocole (100) :
- détecter que le périphérique (140) utilise une variante d'un protocole spécifique d'une unité de protocole spécifique (130) dans le système adaptateur de protocole (100) et que la variante n'est pas prise en charge par l'unité de protocole spécifique (130),
- déterminer qu'un nouveau fragment est requis pour l'adaptation de communication du protocole spécifique, dans lequel le nouveau fragment est l'un des éléments suivants : un morceau de code de programme d'ordinateur au format script ou binaire, une extension d'un protocole déjà en cours d'exécution, un schéma de service pour le mappage des extensions de service, une table mappant différentes fonctionnalités du service et une chaîne de texte,
- en réponse à la détermination que le nouveau fragment est requis pour l'adaptation de communication du protocole spécifique, déterminer quel fragment est requis pour l'adaptation de communication du protocole spécifique
- en réponse à la détermination d'un fragment particulier requis pour l'adaptation de communication du protocole spécifique, extraire le fragment particulier nécessaire à l'adaptation de communication du protocole spécifique à la variante,
- installer le fragment particulier dans l'unité de protocole spécifique (130), permettant ainsi la communication entre l'application générique (150) et le périphérique (140),
dans lequel, lorsque le système adaptateur de protocole (100) ne parvient pas à déterminer quel fragment est requis pour l'adaptation de communication du protocole spécifique, le programme d'ordinateur amène le système adaptateur de protocole (100) à effectuer les étapes suivantes :
la transmission d'une requête à une unité de fournisseur de protocole (120) dans le système adaptateur de protocole (100) pour déterminer le fragment particulier requis pour permettre la communication entre l'application générique (150) et le périphérique (140), la requête comprenant des informations sur le périphérique ; et
la réception du fragment particulier de l'unité de fournisseur de protocole (120) pour l'installation du fragment particulier dans l'unité de protocole spécifique (130).
